# EUROPEAN PATENT APPLICATION

(11) **EP 3 670 641 A1**
(43) Date of publication of application: **24.06.2020**
(21) Application number: 18846278.2
(22) Date of filing: 13.08.2018
(51) Int. Cl.: C12G 3/06, A23L 2/00, A23L 2/38, A23L 2/68

(54) **NONSWEET BEVERAGE**

(30) Priority: 18.08.2017 JP 2017158080
(71) Applicant: Asahi Group Holdings, Ltd., Tokyo 130-8602 (JP); Asahi Breweries, Ltd., Tokyo 130-8602 (JP)
(72) Inventor: OHASHI, Takuya, Moriya-shi Ibaraki 302-0106 (JP)
(74) Representative: Müller-Boré & Partner Patentanwälte PartG mbB
(86) International application number: PCT/JP2018/030180
(87) International publication number: WO 2019/035439

(57) **Abstract**

The problem of the present invention is to provide a non-sweet beverage having reduced or no bitterness, reduced acidity, and excellent drinkability. The means for solving the problem is a non-sweet beverage having a bitterness units of 5 BU or less, a genuine extract value of 7% or less, and containing ethyl caproate in an amount of 1 mg/L or less.

## Description

### Technical Field

The present invention relates to a non-sweet beverage, and more particularly to a non-sweet beverage containing a grain-derived component.

### Background Art

Non-sweet beverages are beverages that do not make a drinker feel a sweet taste. Sweet beverages that evoke a sweet taste generally reduce appetite. For this reason, non-sweet beverages are preferred as beverages taken with food during meals. Since non-sweet beverages do not exhibit a sweet taste with a high palatability rate, it is necessary to realize palatability for consumers by optimizing the flavor, stimulating feeling and the like.

Specific examples of non-sweet beverages include alcoholic beverages such as beer, distilled liquor, plain shochu with soda, whiskey with soda, and gin and tonic, and non-alcoholic beverages such as non-alcoholic beer taste beverages, sugar-free tea, and sugar-free coffee.

A relatively large amount of moisture is taken during meals, and in non-sweet beverages, a flavor that one can drink in large amounts without getting tired of them is preferred. The nature of beverages that allow one to drink in large amounts without getting tired of them is called "drinkability". Beverages with excellent drinkability satisfy physiological desires, such as alleviating thirst and washing away fats derived from meals remaining in an oral cavity. Beer, low-malt beer, third beer, beer-taste beverages such as non-alcoholic beer-taste beverages, shochu with soda, and whiskey with soda are cited as an example of beverages excellent in drinkability.

"Beer" refers to a beverage obtained by using, as raw materials, malt, hops, water, and the like, and fermenting them. "Beer taste" means that taste and aroma are similar to such an extent that they remind us of beer. "Alcoholic beverage" refers to a beverage containing in substantial amounts ethyl alcohol. According to the Japanese Liquor Tax Law, beverages with a volume alcohol content of 1% or more are liquors. These liquors are one example of alcoholic beverages. As used herein, the term "alcohol" means ethyl alcohol.

Beer is a non-sweet beverage having malt aroma, fermented aroma and acidity, hop aroma and bitterness, moderate alcoholic stimulation, and excellent drinkability. However, some consumers do not like the bitterness of beer, and their number tends to increase recently. In order to meet such consumer demand, for example, when the amount of hops is reduced to reduce the bitterness, flavor characteristics become less pronounced, acidity stands out, and drinkability of the beverage is reduced.

Patent Documents 1 and 2 disclose that, in an unfermented beer-flavored malt beverage, a pH adjuster, a protein hydrolyzate, and an amino acid are added to wort to reduce the acidity of the pH adjuster. These unfermented beer-flavored malt beverages are produced using hops, and the acidity is moderated by hop aroma and bitterness. Further, when a protein hydrolyzate, and an amino acid are added to the beverage, the body of the beverage is enhanced, the taste becomes heavy, and the drinkability is reduced. Prior Art Documents:

### Patent Documents:

Patent Document 1: JP 2011-239739 A
Patent Document 2: JP 2010-284153 A

### Summary of Invention

### Problem to be Solved by Invention

The present invention solves the above-mentioned conventional problems, and an object thereof is to provide a non-sweet beverage having reduced or no bitterness, reduced acidity, and excellent drinkability.

### Means for Solving Problem

The present invention provides a non-sweet beverage having a bitterness units of 5 BU or less, a genuine extract value of 7% or less, and containing ethyl caproate in an amount of 1 mg/L or less.

In one embodiment, the non-sweet beverage contains a grain-derived component.

In one embodiment, the genuine extract value is 0.5 to 6%.

In one embodiment, the non-sweet beverage contains (a) 4-vinyl guaiacol in an amount of less than 300 µg/L.

In one embodiment, the non-sweet beverage has (b) an acidity in terms of citric acid of 0.05 g/100 mL or more and less than 0.30 g/100 mL.

In one embodiment, the non-sweet beverage has an a/b ratio of 100-2000.

In one embodiment, the non-sweet beverage contains an alcohol.

In one embodiment, the non-sweet beverage is a fermented beverage.

In one embodiment, the non-sweet beverage contains a distilled liquor.

In one embodiment, the distilled liquor is one selected from the group consisting of raw material alcohol, spirits, whiskey, brandy, vodka, rum, tequila, gin and shochu.

In one embodiment, the non-sweet beverage contains no hop-derived components.

### Effect of Invention

By the present invention, a non-sweet beverage having reduced or no bitterness, reduced acidity, and excellent drinkability was provided.

### Description of Embodiments

The beverage of the present invention is preferably produced using components derived from cereals as raw materials. Specific examples of the cereals include, but are not particularly limited to, barley, wheat, rye, oat, rice, soybeans, peas, corn, and the like. In particular, grain contains an aromatic flavor component, and inclusion of a grain-derived component makes it easier to improve the palatability of non-sweet beverages. The grain referred herein includes at least barley and wheat. The grain-derived component may be barley, wheat, rye and oats, and the malts thereof. The beverage of the present invention may be a fermented beverage produced through a fermentation process or a non-fermented beverage manufactured without a fermentation process.

The beverage of the present invention may be a refreshing beverage substantially containing no alcohol, or may be an alcoholic beverage substantially containing alcohol. In the case of an alcoholic beverage, the amount of alcohol is preferably 2% (v/v) or more in concentration, more preferably 3 to 11% in concentration, and even more preferably 5 to 9% in concentration. Since moderate alcoholic stimulation is obtained when alcohol is contained in such a concentration range, the palatability and drinkability of the beverage are easily improved.

The alcohol concentration of the beverage may be adjusted by a conventionally known method. For example, when a starch raw material and a sugar raw material are fermented to produce a non-sweet beverage, the alcohol concentration of the beverage may be adjusted by devising brewing conditions such as increasing or decreasing the amount used of the starch raw material or the sugar raw material. The alcohol concentration of the beverage may also be adjusted by adding alcohol, drinking water or carbonated water to the beverage.

Alcohols to be added to the beverage of the present invention are not particularly limited as long as they contain alcohol, and may be, for example, raw material alcohol, distilled liquors such as spirits, whiskey, brandy, vodka, rum, tequila, gin and shochu. As the alcohols used in the present invention, raw material alcohol, and distilled liquors with less characteristic aroma, such as vodka, are preferred since the alcohol concentration may be increased without affecting the taste of the beverage of the present invention very much, and raw material alcohol is more preferred.

The beverage of the present invention has a genuine extract value of 7% or less. If the genuine extract value exceeds 7%, it makes it easier for those who drink it to feel sweetness, which may adversely affect their appetite when taken with food during a meal. The genuine extract value of the beverage of the present invention is preferably 0.5 to 6%, and more preferably 1 to 4%.

The genuine extract refers to a solid itself (soluble evaporation residue) that exists in solution particularly in a fermented beverage, and that remains without being evaporated when the beverage (if there are insoluble matters such as yeast and protein coagulates, after separating them by filtration) is gently heated to evaporate all of moisture, alcohol, carbon dioxide, and other volatile components to dryness, or the content thereof (% by weight).

The raw material extract refers to a theoretically estimated solid content (% by weight) that a fermented beverage (commonly including wort or a semi-product in which fermentation has started, and some alcohol is beginning to be contained) used to contain in the state of a raw material sugar liquid before fermentation. The raw material extract is herein the same as "raw wort extract" in the beer art, or a superordinate concept thereof.

The genuine extract value of the beverage (in the case of a fermented beverage) may be adjusted by changing the composition of raw materials, preparation conditions, yeast species, fermentation conditions, raw material extract, and the like. (In the case of a non-fermented beverage), it may be adjusted by changing the composition of raw materials.

The beverage of the present invention has a bitterness units of 5 BU or less. The bitterness units of the beverage of the present invention may be 0 BU. If the bitterness units exceeds 5 BU, it is more likely to be avoided by those consumers who do not like bitterness. The "bitterness units" is herein an index of bitterness given by a group of hop-derived substances consisting primarily of isohumulone. The bitterness units may be measured, for example, by the EBC method (Beer Brewing Association: "Beer Analysis Method" 8. 15 1990).

The bitterness units of the beverage may be adjusted by changing the amount used of hop-derived components such as hops and hop extracts. The beverage of the present invention may contain hop-derived components within a range in which the bitterness units is 5.0 BU or less. However, the hop-derived components may not be contained. The bitterness units of the beverage of the present invention is preferably 3.0 BU or less, and more preferably 2.0 BU or less.

During the fermentation process, yeast produces organic acids along with alcohol. Also, a commercially available beverage product needs to have a sterilizing ability from the viewpoint of food hygiene, and is adjusted to, for example, 4.0 or less so that its pH becomes acidic by adding an acidic substance. In general, the presence of bitterness makes it difficult to feel acidity, and in beverages having a high bitterness units, drinkability is not impaired even if an acidic substance such as an organic acid is contained. However, the beverage of the present invention has a problem that the acidity stands out and drinkability is likely to be reduced since the bitterness units is limited to as low as 5 BU or less.

The beverage of the present invention preferably has an acidity in terms of citric acid of 0.05 to 0.30 g/100 mL. In a beverage having an acidity within the above range, the acidity easily becomes noticeable when the bitterness units is limited to 5 BU or less. The beverage of the present invention preferably has an acidity of 0.10 to 0.20 g/100mL.

In the present invention, the acidity may be expressed by the number of grams when the acid amount contained in a 100mL-beverage is converted into citric acid. The acidity refers to a citric acid conversion value calculated based on the method for measuring acidity defined by Japanese Agricultural Standards for Fruit Beverage (December 24, 2013, Notification of Ministry of Agriculture, Forestry and Fisheries of Japan No. 3118).

The beverage of the present invention contains a specific amount of ethyl caproate. Ethyl caproate is known as a source substance of a high-grade fermented aroma. Since the beverage of the present invention is low in the concentration of hop-derived components or contains no hop-derived components and has a poor aroma, the palatability tends to be reduced. Therefore, by including ethyl caproate, rich ester aromas are imparted, thereby contriving an improvement in the palatability.

The amount of ethyl caproate of the beverage of the present invention is 1 mg/L or less in concentration. When the concentration of ethyl caproate exceeds 1 mg/L, rich ester aromas are emphasized, resulting in reduced drinkability. The ethyl caproate concentration of the beverage of the present invention is preferably 0.1 to 0.5 mg/L, and more preferably 0.1 to 0.3 mg/L.

The ethyl caproate concentration of the beverage (in the case of a fermented beverage) may be adjusted by changing the composition of raw materials, preparation conditions, yeast species, fermentation conditions, raw material extract, and the like. (In the case of a non-fermented beverage), it may be adjusted by changing the composition of raw materials.

In the production process of the fermented beverage or the non-fermented beverage of the present invention, the ethyl caproate concentration of the beverage may be adjusted by adding a predetermined amount of ethyl caproate as a flavor.

The amount of ethyl caproate may be measured, for example, using the high performance liquid chromatography (HPLC) analysis method. For example, the beverage of the present invention may be ice cooled, a degassed sample may be injected into an HPLC device and then processed. An example of the measurement conditions is as follows.

**[Table 1]**

| | |
|---|---|
| HPLC Device | "LC 1200" series manufactured bv Agilent Technolopies, Inc. |
| UV Detector | Detection wavelength of 340 nm |
| Column | "Inertsil ODS-4" manufactured by GL Sciences, Inc. |
| Mobile Phase | A: 0.2% Trifluoroacetic acid aqueous solution, B: 0.2% Aqueous solution of trifluoroacetic acid dissolved in methanol |
| Flow Rate | Gradient at 0.3 mL/min |
| Column Temperature | 40°C |
| Sample Injection Volume | 40 µm |

The beverage of the present invention preferably contains 4-vinyl guaiacol (hereinafter, referred to as "4-VG"). The amount of 4-VG of the beverage of the present invention is preferably not more than 300 µg/L in concentration. 4-VG is known as a substance that increases during abnormal fermentation of a fermented liquid (particularly at the time of microbial contamination), and when 4-VG is excessively high, it is recognized as an unpleasant odor. When 4-VG is not contained, the drinkability of the beverage may be reduced as a result of insufficient suppression of the acidity. When the concentration of 4-VG exceeds 300 µg/L, the unpleasant odor stands out, so that the drinkability of the beverage is reduced.

The concentration (a) of 4-VG in the unit of µg/L is preferably such that its ratio to the acidity (b) in terms of citric acid in the unit of g/100 ml, namely, the a/b ratio is preferably 100 to 2,000. If the a/b ratio is less than 100, the suppression of acidity becomes insufficient, and as a result, the drinkability of the beverage tends to be reduced. When the a/b ratio exceeds 2,000, an unpleasant odor stands out, so that the drinkability of the beverage tends to be reduced.

The 4-VG concentration of the beverage (in the case of a fermented beverage) may be adjusted by changing the composition of raw materials, preparation conditions, yeast species, fermentation conditions, raw material extract, and the like. (In the case of a non-fermented beverage), it may be adjusted by changing the composition of raw materials and the like. The 4-VG concentration of the beverage of the present invention is, for example, 20 to 300 µg/L, preferably 50 to 250 µg/L, and more preferably 80 to 200 µg/L.

In the production process of the fermented beverage or non-fermented beverage of the present invention, the 4-VG concentration of the beverage may be adjusted by adding a predetermined amount of 4-VG as a flavor.

The 4-VG concentration may be measured using, for example, the high performance liquid chromatography (HPLC) analysis method. For example, the non-sweet beverage of the present invention may be ice cooled, a degassed sample may be injected into an HPLC device and then processed. An example of the measurement conditions is as follows.

**[Table 2]**

| | |
|---|---|
| HPLC Device | "LC 1200" series manufactured by Agilent Technologies, Inc. |
| UV Detector | Detection wavelength of 340 nm |
| Column | "Inertsil ODS-4" manufactured by GL Sciences, Inc. |
| Mobile Phase | A: 0.2% Trifluoroacetic acid aqueous solution, B: 0.2% Aqueous solution of trifluoroacetic acid dissolved in methanol |
| Flow Rate | Gradient at 0.3 mL/min |
| Column Temperature | 40°C |
| Sample Injection Volume | 40 µm |

For example, the fermented beverage of the present invention may be produced with a method usually conducted for producing beer, except that the amount used of hop-derived components is limited as described above, by obtaining a base fermented liquid, and by adjusting the ethyl caproate concentration, the 4-VG concentration, and the acidity in terms of citric acid to predetermined ranges. The fermented beverage means a beverage produced through a fermentation process of fermenting a sugar solution derived from fermentation raw materials with yeast, regardless of the types of fermentation raw materials. When the base fermented liquid has a 4-VG concentration and an acidity in terms of citric acid within predetermined ranges, the base fermented liquid may be the fermented beverage of the present invention.

Fermentation raw materials refer to beverage raw materials that may be fermented using yeast. The fermentation raw materials include malt, cereals and auxiliary materials. The auxiliary materials mean fermentation raw materials different from malt and cereals. Examples of the auxiliary materials include, but are not limited to, starch raw materials such as corn starch and corn grits, and sugar raw materials such as liquid sugar and sugar. Liquid sugar is produced by decomposing and saccharifying starchy material with an acid or a diastatic enzyme, and mainly includes glucose, maltose, maltotriose and the like.

In the method for producing a fermented beverage, first, as a preparation process (a fermentation raw material liquid preparation process), a fermentation raw material liquid is prepared from one or more selected from the group consisting of cereal raw materials and carbohydrate raw materials. Specifically, a mixture containing at least any of a cereal raw material and a carbohydrate raw material, and raw water is prepared and heated to saccharify a starchy material such as a cereal raw material. As a raw material of the sugar solution, only the cereal raw material may be used, or only the carbohydrate raw material may be used, or the both may be used by mixing them. Examples of the cereal raw material include, for example, grains such as barley, wheat and their malts; rice, corn, beans such as soybeans, potatoes and the like. Although the cereal raw material may also be used as cereal syrup, cereal extract and the like, it is preferably used as a crushed cereal product obtained by subjecting it to crushing treatment. The crushing treatment of cereals may be done by a conventional method. Crushed cereal products may be those which have been subjected to treatment, commonly conducted before or after the crushing treatment, such as a crushed malt product, corn starch, and corn grits. The crushed cereal product used is preferably a crushed malt product.

The crushed malt product may be those which are obtained by germinating barley, for example two-rowed barley, by a conventional method, drying it and crushing it to a predetermined grain size. One cereal raw material or a mixture obtained by mixing a plurality of cereal raw materials may serve as the cereal raw material used in the present invention. For example, a crushed malt product may be used as a main raw material, and a crushed product of rice or corn may be used as an auxiliary material. Examples of the carbohydrate raw material include, for example, sugars such as liquid sugar.

Auxiliary materials different from the cereal raw materials and the like and water may be added to the mixture. Examples of the auxiliary materials include, for example, hops, dietary fiber, yeast extract, fruit juice, a bittering agent, a colorant, a herb, a flavoring and the like. Also, as necessary, diastatic enzymes such as α-amylase, β- amylase , glucoamylase and pullanase, and an enzyme drug such as protease, may be added.

Saccharification treatment is conducted using an enzyme derived from a cereal raw material and the like, or an enzyme separately added. The time and temperature during the saccharification treatment is adjusted as needed considering the kind of cereal raw material and the like used, percentage of cereal raw materials of the total fermentation raw materials, kind of enzyme added and amount of the mixture, quality of the intended fermented beverage and the like. For example, the saccharification treatment may be conducted by a conventional method such as holding a mixture containing the cereal raw material and the like at 30-70°C for 20-90 minutes.

By boiling a sugar solution obtained after the saccharification treatment, syrup (a boiled product of the sugar solution) may be prepared. It is preferred that the sugar solution is filtered before boiling treatment, and that the resultant filtrate is subjected to the boiling treatment. In place of the filtrate of this sugar solution, malt extract added with warm water may also be used, followed by boiling. The boiling method and its conditions may be determined as needed.

A fermented beverage with the desired flavor may be produced by adding a herb and the like as needed before the boiling treatment or during the boiling treatment. In particular, hops are preferably added before the boiling treatment or during the boiling treatment. The boiling treatment in the presence of hops may efficiently extract a flavor/aroma component. The amount of hops to be added, addition mode thereof (for example, added in several times and the like), and boiling conditions therefor may be determined as needed.

After the preparation process and before the fermentation process, lees such as proteins produced by precipitation are preferably removed from the prepared syrup. Although the removal of lees may be conducted by any solid-liquid separation treatment, generally, lees are removed using a tank called a whirlpool. The temperature of the syrup at this time may be 15°C or higher, and it is typically conducted at a temperature of about 50-100°C. The syrup (filtrate) after the lees have been removed is cooled to an appropriate fermentation temperature by a plate cooler and the like. The syrup after the lees have been removed serves as a fermentation raw material liquid.

Next, as the fermentation process, yeast is inoculated into the cooled fermentation raw material liquid to carry out fermentation. The cooled fermentation raw material liquid may be directly subjected to the fermentation process, or may be subjected to the fermentation process after having been adjusted to the desired extract concentration. The yeast used for the fermentation is not particularly limited, and may be usually selected and used as needed from among those yeasts which are used for producing liquors. Although it makes no difference between top fermented yeast and bottom fermented yeast, bottom fermented yeast is preferred since it is easily applied to large-scale brewing equipment.

Furthermore, as a liquor storage process, the resultant fermented liquid is aged in a storage tank, stored under a low-temperature condition of about 0°C to be stabilized. Thereafter, as a filtration process, the fermented liquid after aging is filtered to remove yeast, insoluble proteins and the like in this temperature range, so that a base fermented liquid may be obtained. This filtration treatment may be any method so long as it may remove yeast by filtration, for example, diatomaceous filtration, filter filtration by a filter with an average pore size of about 0.4-0.6 µm and the like are cited. Before and after the storage process and the filtration process, a seasoning, a flavoring, fruit juice, a distilled liquor and the like may also be added.

For example, the non-fermented beverage of the present invention may be produced with a method usually conducted for producing non-fermented beer taste beverage, except that the amount used of hop-derived components is limited as described above, by obtaining a base fermented liquid, and by adjusting the ethyl caproate concentration, the 4-VG concentration, and the acidity in terms of citric acid to predetermined ranges. The description of the International Publication No. WO 2013/080354 A is incorporated herein as a method for producing a non-fermented beer-flavored beverage.

As an example of a production process of a base liquid of a non-fermented beverage, first a polymeric saccharide, a sweet-taste substance and other components are mixed to prepare a composition. Then, a predetermined amount of drinking water is added to the composition to prepare a primary raw material liquid. After boiling the primary raw material liquid, liquors are added, and carbonic acid is added by a carbonation process.

The liquors added serve as an alcohol source, for example, raw material alcohol, shochu, awamori, whiskey, brandy, vodka, rum, tequila, gin, spirits and the like may be used. Among others, raw material alcohol is commonly used from the perspective of cost. Raw material alcohol includes those in which an alcohol-fermented liquid using as a raw material molasses obtained from sugarcane and the like is distilled to an ethanol concentration of about 95% by a continuous distillation still, and then appropriately diluted, if necessary, until the ethanol concentration becomes 45% as a lower limit to be used.

As necessary, precipitates may also be separated and removed in each step by filtration, centrifugation and the like. Also, after the above raw material liquid has been prepared in a thick state, carbonated water may be added. These enable a non-fermented beverage to be simply prepared by using a normal soft drink production process without having fermentation facilities.

If precipitates are removed before the carbonation process and carbonated water addition process, a causative substance for lees and off-flavors may be removed, which is more preferred. As necessary, filtration and sterilization may also be conducted before the carbonation process and carbonated water addition process.

### [Examples]

Next, the present invention will be described more specifically with reference to examples, but the present invention is not limited to the following examples.

### <Sensory Evaluation>

The properties of the produced beverages were evaluated by performing a sensory test based on the following conditions. That is, the temperature of the beverages was adjusted to about 8°C, and eight panelists selected after having received sensory test training for beers tasted and scored senses of predetermined evaluation items on a seven-point scale. The evaluation items and scoring criteria are shown below. An average of the scores of the eight panelists was adopted as the evaluation score.

**[Table 3]**

| Evaluation Item | Evaluation Criteria |
|---|---|
| Acidity Intensity | 1 point (carbonated water^{*1}, not feel), 7 points (liquid in which 0.5g/100 mL phosphoric acid^{*2} in terms of citric acid was added to carbonated water, strongly feel) |
| Bitterness Intensity | 1 point (carbonated water, not feel), 7 points (liquid in which bitter substance^{*3} was added to carbonated water to become 15 B.U.) |
| Intensities of Aromas | 1 point (carbonated water, not feel), 7 points (liquid in which 1.5 ppm of ethyl caproate, and 600 ppb of 4-VG were added to carbonated water, strongly feel) |
| Intensities of Lingering Flavors | 1 point (carbonated water, not feel), 7 points (liquid in which bitter substance was added to carbonated water to become 15 B.U., and 1.5 ppm of ethyl caproate, 600 ppb of 4-VG, and 0.5 g/100 mL of phosphoric acid in terms of citric acid were added thereto, strongly feel) |
| Balance of Lingering Flavors | 1 point (poor), 7 points (very good) |
| Wateriness | 1 point (commercially available beer^{*4}, not applicable), 7 points (carbonated water, applicable) |
| Palatability | 1 point (not applicable), 7 points (applicable) |
| Drinkability | 1 point (poor), 7 points (very good) |

| | |
|---|---|
| *1: Commercially available product *2: "Food additive phosphoric acid" (trade name) manufactured by FUJIFILM Wako Pure Chemical Corporation *3: "Isomerized hop extract" (trade name) manufactured by Hop Steiner, Inc. *4: "Asahi Super Dry" (trade name) manufactured by Asahi Breweries, Ltd. | |

The drinkability score is determined by mainly considering whether or not one may continually drink the beverage, and intensities of lingering flavors, and by secondarily considering intensities of aromas, balance of the lingering flavors, wateriness and palatability. When the evaluation score is 4.0 or higher, the drinkability is judged to be good.

### <Production Example>

### Production of Base Fermented Liquid

480 g of sucrose was dissolved in 4L of hot water the hardness of which had been adjusted, and phosphoric acid was added thereto until its acidity in terms of citric acid became 0.15 g/100 ml as a liquid after the filtration process, followed by boiling for 90 minutes. After boiling, hot water was mixed until raw material extract, namely raw wort extract became 12%, and the mixture was cooled. After cooling, yeast was added and fermented at 10°C for 7 days. Thereafter, the mixture was aged, cooled, diluted with degassed water, and filtered to obtain a base fermented liquid. Since no hop-derived components were added, the base fermented liquid had a bitterness units of substantially 0 BU. (It may be about 1 to 2 BU because of the noise included in the analysis.) The genuine extract was 1.5 to 1.8%, alcohol content was 5 to 6 (v/v)%, ethyl caproate was 0.1 mg/L, acidity in terms of citric acid was 0.15 g/100 ml, and 4-VG was 0 ppb.

### <Example 1>

The base fermented liquid served as Test Plot 1. To this was added a predetermined amount of 4-VG to thereby produce beverages of Test Plots 2 to 5. Sensory evaluations of the obtained beverages were conducted. Table 4 shows the formulas and evaluation results of the beverages.

**[Table 4]**

| | | Test Plot | | | | |
|---|---|---|---|---|---|---|
| | | 1 | 2 | 3 | 4 | 5 |
| Concentration/ Properties | Ethyl Caproate (ppm) | 0.1 | 0.1 | 0.1 | 0.1 | 0.1 |
| | Acidity (a) (g/100 mL) | 0.15 | 0.15 | 0.15 | 0.15 | 0.15 |
| | 4-VG (b) (ppb) | 0 | 20 | 100 | 200 | 500 |
| | Bitterness Units (BU) | 0 | 0 | 0 | 0 | 0 |
| | b/a Value | 0 | 133 | 667 | 1333 | 3333 |
| Evaluation | Intensities of Aromas | 2.0 | 3.9 | 4.5 | 6.1 | 6.5 |
| | Balance of Aromas | 3.6 | 4.5 | 5.5 | 5.1 | 1.9 |
| | Acidity Intensity | 3.6 | 3.1 | 1.9 | 2.0 | 1.5 |
| | Bitterness Intensity | 1.6 | 1.8 | 1.8 | 1.4 | 1.6 |
| | Intensities of Lingering Flavors | 4.8 | 2.1 | 2.3 | 3.0 | 5.5 |
| | Balance of Lingering Flavors | 2.8 | 4.9 | 6.3 | 5.6 | 2.9 |
| | Wateriness | 5.9 | 3.8 | 3.0 | 1.6 | 1.9 |
| | Palatability | 2.0 | 4.0 | 4.9 | 6.0 | 3.3 |
| | Drinkability | 3.1 | 4.2 | 5.3 | 5.2 | 3.8 |

### <Example 2>

The acidity was adjusted to 0.05 g/100 mL by adding carbonated water to the base fermented liquid to dilute it, the ethyl caproate concentration was adjusted to 0.1 ppm by adding ethyl caproate thereto, and the alcohol concentration was adjusted to 5 (v/v)% by adding raw material alcohol thereto. The base fermented liquid in which the acidity, ethyl caproate concentration, and alcohol content had been adjusted served as Test Plot 6. To this was added a predetermined amount of 4-VG to thereby produce non-sweet beverages of Test Plots 7 to 10. The sensory evaluations of the obtained beverages were conducted. Table 5 shows the formulas and evaluation results of the beverages.

**[Table 5]**

| | | Test Plot | | | | |
|---|---|---|---|---|---|---|
| | | 6 | 7 | 8 | 9 | 10 |
| Concentration/ Properties | Ethyl Caproate (ppm) | 0.1 | 0.1 | 0.1 | 0.1 | 0.1 |
| | Acidity (a) (g/100 mL) | 0.05 | 0.05 | 0.05 | 0.05 | 0.05 |
| | 4-VG (b) (ppb) | 0 | 20 | 100 | 200 | 500 |
| | Bitterness Units (BU) | 0 | 0 | 0 | 0 | 0 |
| | b/a Ratio | 0 | 400 | 2000 | 4000 | 10000 |
| Evaluation | Intensities of aromas | 2.1 | 4.3 | 4.6 | 6.0 | 6.4 |
| | Balance of Aromas | 4.8 | 5.1 | 5.4 | 3.1 | 1.4 |
| | Acidity Intensity | 1.4 | 1.5 | 2.1 | 1.3 | 1.9 |
| | Bitterness Intensity | 1.5 | 1.3 | 2.4 | 1.9 | 2.0 |
| | Intensities of Lingering Flavors | 2.0 | 2.5 | 3.0 | 5.0 | 6.1 |
| | Balance of Lingering Flavors | 4.5 | 5.1 | 5.9 | 2.6 | 2.0 |
| | Wateriness | 5.8 | 3.9 | 3.6 | 3.0 | 2.3 |
| | Palatability | 2.3 | 4.1 | 5.1 | 2.9 | 1.6 |
| | Drinkability | 3.9 | 4.4 | 5.6 | 2.8 | 2.1 |

### <Example 3>

The acidity was adjusted to 0.3 g/100 mL by adding an acidulant ("phosphoric acid" manufactured by Wako Pure Chemical Corporation) to the base fermented liquid. The base fermented liquid, the acidity of which had been adjusted to 0.3 g/100mL, served as Test Plot 11. To this was added a predetermined amount of 4-VG to thereby produce non-sweet beverages of Test Plots 12 to 15. The sensory evaluations of the obtained beverages were conducted. Table 6 shows the formulas and evaluation results of the beverages.

**[Table 6]**

| | | Test Plot | | | | |
|---|---|---|---|---|---|---|
| | | 11 | 12 | 13 | 14 | 15 |
| Concentration/ Properties | Ethyl Caproate (ppm) | 0.1 | 0.1 | 0.1 | 0.1 | 0.1 |
| | Acidity (a) (g/100 mL) | 0.3 | 0.3 | 0.3 | 0.3 | 0.3 |
| | 4-VG (b) (ppb) | 0 | 20 | 100 | 200 | 500 |
| | Bitterness Units (BU) | 0 | 0 | 0 | 0 | 0 |
| | b/a Ratio | 0 | 67 | 333 | 667 | 1667 |
| Evaluation | Intensities of Aromas | 3.0 | 2.8 | 3.9 | 4.9 | 6.1 |
| | Balance of Aromas | 4.0 | 4.1 | 4.5 | 6.1 | 3.3 |
| | Acidity Intensity | 4.3 | 4.5 | 3.8 | 3.4 | 1.8 |
| | Bitterness Intensity | 1.4 | 1.6 | 1.8 | 1.6 | 1.6 |
| | Intensities of Lingering Flavors | 3.9 | 5.3 | 3.1 | 3.4 | 5.0 |
| | Balance of Lingering Flavors | 2.9 | 3.4 | 5.0 | 6.3 | 3.5 |
| | Wateriness | 5.0 | 2.0 | 1.8 | 2.4 | 1.6 |
| | Palatability | 1.9 | 3.0 | 5.4 | 6.0 | 2.9 |
| | Drinkability | 1.4 | 2.9 | 4.9 | 5.7 | 3.1 |

### <Example 4>

The ethyl caproate concentration was adjusted to 1 ppm by adding ethyl caproate to the base fermented liquid. The base fermented liquid, the ethyl caproate concentration of which had been adjusted, served as Test Plot 16. To this was added a predetermined amount of 4-VG and to thereby produce non-sweet beverages of Test Plots 17 to 20. The sensory evaluations of the obtained beverages were conducted. Table 7 shows the formulas and evaluation results of the beverages.

**[Table 7]**

| | | Test Plot | | | | |
|---|---|---|---|---|---|---|
| | | 16 | 17 | 18 | 19 | 20 |
| Concentration/ Properties | Ethyl Caproate (ppm) | 1 | 1 | 1 | 1 | 1 |
| | Acidity (a) (g/100 mL) | 0.15 | 0.15 | 0.15 | 0.15 | 0.15 |
| | 4-VG (b) (ppb) | 0 | 20 | 100 | 200 | 500 |
| | Bitterness Units (BU) | 0 | 0 | 0 | 0 | 0 |
| | b/a Ratio | 0 | 133 | 667 | 1333 | 3333 |
| Evaluation | Intensities of Aromas | 3.6 | 5.5 | 4.6 | 5.8 | 6.4 |
| | Balance of Aromas | 5.6 | 4.9 | 6.1 | 5.1 | 2.9 |
| | Acidity Intensity | 3.0 | 2.6 | 1.8 | 1.9 | 2.0 |
| | Bitterness Intensity | 1.4 | 1.9 | 1.8 | 2.0 | 1.8 |
| | Intensities of Lingering Flavors | 5.1 | 2.9 | 2.8 | 4.0 | 4.9 |
| | Balance of Lingering Flavors | 2.1 | 4.9 | 6.0 | 5.1 | 3.0 |
| | Wateriness | 4.8 | 1.9 | 2.4 | 2.0 | 1.4 |
| | Palatability | 2.9 | 4.9 | 5.9 | 4.0 | 2.8 |
| | Drinkability | 2.5 | 4.8 | 6.2 | 4.3 | 3.0 |

### <Example 5>

The 4-VG concentration was adjusted to 20 ppm by adding 4-VG to the base fermented liquid. The fermentation liquid, the 4-VG concentration of which had been adjusted, served as Test Plot 21. To this was added a predetermined amount of a bitter substance ("Isomerized Hop Extract" manufactured by Hopsteiner, Inc.) to thereby produce non-sweet beverages of Test Plots 22 and 23. The sensory evaluations of the obtained beverages were conducted. Table 8 shows the formulas and evaluation results of the beverages.

**[Table 8]**

| | | Test Plot | | |
|---|---|---|---|---|
| | | 21 | 22 | 23 |
| Concentration/ Properties | Ethyl Caproate (ppm) | 0.1 | 0.1 | 0.1 |
| | Acidity (a) (g/100 mL) | 0.15 | 0.15 | 0.15 |
| | 4-VG (b) (ppb) | 20 | 20 | 20 |
| | Bitterness Units (BU) | 0 | 5 | 10 |
| | b/a Ratio | 133 | 133 | 133 |
| Evaluation | Intensities of Aromas | 3.9 | 2.9 | 2.8 |
| | Balance of Aromas | 4.5 | 4.5 | 4.9 |
| | Acidity Intensity | 3.1 | 3.9 | 4.1 |
| | Bitterness Intensity | 1.8 | 3.9 | 6.1 |
| | Intensities of Lingering Flavors | 2.1 | 3.8 | 4.9 |
| | Balance of Lingering Flavors | 4.9 | 3.9 | 3.1 |
| | Wateriness | 3.8 | 2.3 | 1.8 |
| | Palatability | 4.0 | 4.3 | 3.1 |
| | Drinkability | 4.8 | 4.6 | 3.1 |

### <Example 6>

The 4-VG concentration was adjusted to 100 ppm by adding 4-VG to the base fermented liquid. The fermented liquid, the 4-VG concentration of which had been adjusted, served as Test Plot 24. To this was added a predetermined amount of a bitter substance ("Isomerized Hop Extract" manufactured by Hopsteiner, Inc.) to thereby produce non-sweet beverages of Test Plots 25 and 26. The sensory evaluations of the obtained beverages were conducted. Table 9 shows the formulas and evaluation results of the beverages.

**[Table 9]**

| | | Test Plot | | |
|---|---|---|---|---|
| | | 24 | 25 | 26 |
| Concentration/ Properties | Ethyl Caproate (ppm) | 0.1 | 0.1 | 0.1 |
| | Acidity (a) (g/100 mL) | 0.15 | 0.15 | 0.15 |
| | 4-VG (b) (ppb) | 100 | 100 | 100 |
| | Bitterness Units (BU) | 0 | 5 | 10 |
| | b/a Ratio | 667 | 667 | 667 |
| Evaluation | Intensities of Aromas | 4.5 | 4.1 | 4.1 |
| | Balance of Aromas | 5.1 | 5.3 | 3.8 |
| | Acidity Intensity | 1.9 | 2.8 | 3.3 |
| | Bitterness Intensity | 1.9 | 3.4 | 5.1 |
| | Intensities of Lingering Flavors | 2.1 | 4.0 | 4.9 |
| | Balance of Lingering Flavors | 6.0 | 5.3 | 2.8 |
| | Wateriness | 2.9 | 1.9 | 2.8 |
| | Palatability | 4.5 | 5.1 | 3.1 |
| | Drinkability | 5.5 | 6.0 | 3.7 |

### <Example 7>

The 4-VG concentration was adjusted to 200 ppm by adding 4-VG to the base fermented liquid. The fermented liquid, the 4-VG concentration of which had been adjusted, served as Test Plot 27. To this was added a predetermined amount of a bitter substance ("Isomerized Hop Extract" manufactured by Hopsteiner, Inc.) to thereby produce non-sweet beverages of Test Plots 28 and 29. The sensory evaluations of the obtained beverages were conducted. Table 10 shows the formulas and evaluation results of the beverages.

**[Table 10]**

| | | Test Plot | | |
|---|---|---|---|---|
| | | 27 | 28 | 29 |
| Concentration/ Properties | Ethyl Caproate (ppm) | 0.1 | 0.1 | 0.1 |
| | Acidity (a) (g/100 mL) | 0.15 | 0.15 | 0.15 |
| | 4-VG (b) (ppb) | 200 | 200 | 200 |
| | Bitterness Units (BU) | 0 | 5 | 10 |
| | b/a Ratio | 1333 | 1333 | 1333 |
| Evaluation | Intensities of Aromas | 5.9 | 4.6 | 5.3 |
| | Balance of Aromas | 5.0 | 4.0 | 3.8 |
| | Acidity Intensity | 2.1 | 3.3 | 2.3 |
| | Bitterness Intensity | 1.5 | 2.6 | 5.1 |
| | Intensities of Lingering Flavors | 3.1 | 4.1 | 5.0 |
| | Balance of Lingering Flavors | 5.4 | 5.4 | 2.9 |
| | Wateriness | 1.8 | 1.8 | 1.8 |
| | Palatability | 5.6 | 4.9 | 3.3 |
| | Drinkability | 5.7 | 5.5 | 3.4 |

### <Example 8>

The 4-VG concentration was adjusted to 500 ppm by adding 4-VG to the base fermentated liquid. The fermentation liquid, the 4-VG concentration of which had been adjusted, served as Test Plot 30. To this was added a predetermined amount of a bitter substance ("Isomerized Hop Extract" manufactured by Hopsteiner, Inc.) to thereby produce non-sweet beverages of Test Plots 31 and 32. The sensory evaluations of the obtained beverages were conducted. Table 11 shows the formulas and evaluation results of the beverages.

**[Table 11]**

| | | Test Plot | | |
|---|---|---|---|---|
| | | 30 | 31 | 32 |
| Concentration/ Properties | Ethyl Caproate (ppm) | 0.1 | 0.1 | 0.1 |
| | Acidity (a) (g/100 mL) | 0.15 | 0.15 | 0.15 |
| | 4-VG (b) (ppb) | 500 | 500 | 500 |
| | Bitterness Units (BU) | 0 | 5 | 10 |
| | b/a Ratio | 3333 | 3333 | 3333 |
| Evaluation | Intensities of Aromas | 6.6 | 6.4 | 5.8 |
| | Balance of Aromas | 1.8 | 3.4 | 2.9 |
| | Acidity Intensity | 1.6 | 3.0 | 2.3 |
| | Bitterness Intensity | 1.5 | 2.3 | 5.0 |
| | Intensities of Lingering Flavors | 5.3 | 5.0 | 5.6 |
| | Balance of Lingering Flavors | 2.8 | 2.8 | 1.8 |
| | Wateriness | 2.0 | 1.8 | 1.6 |
| | Palatability | 3.0 | 3.0 | 3.1 |
| | Drinkability | 3.3 | 3.1 | 2.2 |

### <Example 9>

### Hop-free fermented malt beverage

2 kg of a crushed malt product, 8 kg of corn starch, and 40L of hot water, the hardness of which had been adjusted, were mixed in a brewing kettle, and the temperature of the mixture was raised to 100°C, and the mixture was boiled for 30 minutes. On the other hand, 25 kg of malt and 60 L of hot water, the hardness of which had been adjusted, were mixed in a brewing tank, and a proteolytic reaction was conducted at 50°C for 30 minutes. After 30 minutes, 50 L of hot water whose hardness has been adjusted was added to the brewing tank, and the contents of the brewing kettle were transferred to the brewing tank. The contents of the brewing tank were saccharified at 64.5°C for 60 minutes and at 70°C for 10 minutes, and held at 76°C for 5 minutes to inactivate the enzyme to obtain wort. After wort filtration, lactic acid was added until its pH became 5.2, and the mixture was boiled for 60 minutes. After boiling, hot water was mixed until raw material extract, namely, raw wort extract became 12%, and trub was removed in a whirlpool. After removal of the trub, the wort was cooled. After cooling, yeast was added and fermented at 10°C for 7 days. Thereafter, the mixture was aged, cooled, diluted with degassed water, and then beer filtration was conducted to obtain a beer-taste beverage. Since no hop-derived components were added, the bitterness units of the beverage was substantially 0 BU. Also, the genuine extract was 3.4 to 3.5%, alcohol content was 5 to 6 (v/v)%, acidity was 0.12 g/100 ml, ethyl caproate was 0.2 mg/L, and the 4-VG was 110 ppb. The sensory evaluations of the obtained beverages were conducted. Table 12 shows the evaluation results.

**[Table 12]**

| | |
|---|---|
| Intensities of Aromas | 5.8 |
| Balance of Aromas | 6.3 |
| Acidity Intensity | 3.3 |
| Bitterness Intensity | 2.1 |
| Intensities of Lingering Flavors | 3.1 |
| Balance of Lingering Flavors | 6.4 |
| Wateriness | 2.3 |
| Palatability | 6.4 |
| Drinkability | 6.3 |

### <Example 10>

### Non-Alcoholic Carbonated Beverage

To 1L of water, 2% by weight of indigestible dextrin ("Fibersol 2" (registered trademark) manufactured by Matsutani Chemical Industry Co., Ltd.) was added; phosphoric acid was added so that the acidity became 0.15 g/100mL; ethyl caproate was added in an amount of 0.1 ppm; and carbonic acid was dissolved therein so that the gas pressure at 20°C became 0.24 MPa to obtain a base liquid. Since no hop-derived components were added, the bitterness units of the base liquid was substantially 0 BU. The genuine extract was 2.1%.

The base liquid served as Test Plot 1. To this was added a predetermined amount of 4-VG to thereby produce beverages of Test Plots 2 to 5. The sensory evaluations of the obtained beverages were conducted. Table 13 shows the formulas and evaluation results of the beverages.

**[Table 13]**

| | | Test Plot | | | | |
|---|---|---|---|---|---|---|
| | | 1 | 2 | 3 | 4 | 5 |
| Concentration/ Properties | Ethyl Caproate (ppm) | 0.1 | 0.1 | 0.1 | 0.1 | 0.1 |
| | Acidity (a) (g/100 mL) | 0.15 | 0.15 | 0.15 | 0.15 | 0.15 |
| | 4-VG (b) (ppb) | 0 | 20 | 100 | 200 | 500 |
| | Bitterness Units (BU) | 0 | 0 | 0 | 0 | 0 |
| | b/a Value | 0 | 133 | 667 | 1333 | 3333 |
| Evaluation | Intensities of Aromas | 2.3 | 4.2 | 4.3 | 5.6 | 6.5 |
| | Balance of Aromas | 3.4 | 4.6 | 5.2 | 5.7 | 2.9 |
| | Acidity Intensity | 4.3 | 3.2 | 2.0 | 1.9 | 1.6 |
| | Bitterness Intensity | 1.2 | 1.4 | 1.6 | 1.2 | 1.4 |
| | Intensities of Lingering Flavors | 4.5 | 3.0 | 2.9 | 3.0 | 5.4 |
| | Balance of Lingering Flavors | 2.2 | 4.5 | 6.1 | 6.2 | 2.8 |
| | Wateriness | 6.0 | 3.4 | 2.9 | 1.5 | 1.3 |
| | Palatability | 2.2 | 4.2 | 4.7 | 5.7 | 3.2 |
| | Drinkability | 3.0 | 4.2 | 5.5 | 5.6 | 3.4 |

## Claims

1. A non-sweet beverage having a bitterness units of 5 BU or less, a genuine extract value of 7% or less, and containing ethyl caproate in an amount of 1 mg/L or less.

2. The non-sweet beverage according to claim 1, containing a grain-derived component.

3. The non-sweet beverage according to claim 1 or 2, having a genuine extract value of 0.5 to 6%.

4. The non-sweet beverage according to any one of claims 1 to 3, containing (a) 4-vinyl guaiacol in an amount of less than 300 µg/L.

5. The non-sweet beverage according to any one of claims 1 to 4, having (b) an acidity in terms of citric acid of 0.05 g/100mL or more and less than 0.30 g/100mL.

6. The non-sweet beverage according to any one of claims 1 to 5, having an a/b ratio of 100 to 2000.

7. The non-sweet beverage according to any one of claims 1 to 6, containing an alcohol.

8. The non-sweet beverage according to any one of claims 1 to 7, which is a fermented beverage.

9. The non-sweet beverage according to any one of claims 1 to 8, containing a distilled liquor.

10. The non-sweet beverage according to claim 9, wherein the distilled liquor is at least one selected from the group consisting of raw material alcohol, spirits, whiskey, brandy, vodka, rum, tequila, gin and shochu.

11. The non-sweet beverage according to any one of claims 1 to 10, containing no hop-derived components.
